(19)

**Europäisches Patentamt**
**European Patent Office**
**Office européen des brevets**

(11) **EP 4 388 882 A1**

(12) **EUROPEAN PATENT APPLICATION**
published in accordance with Art. 153(4) EPC

(43) Date of publication:
**26.06.2024 Bulletin 2024/26**

(21) Application number: **22858538.6**

(22) Date of filing: **19.08.2022**

(51) International Patent Classification (IPC):
*A23B 9/14* (2006.01)      *A23B 9/20* (2006.01)
*A23B 9/26* (2006.01)      *B01D 53/14* (2006.01)
*B65D 81/26* (2006.01)      *B65D 85/50* (2006.01)

(52) Cooperative Patent Classification (CPC):
**A23B 9/14; A23B 9/20; A23B 9/26; B01D 53/14;**
**B65D 81/26; B65D 85/50**

(86) International application number:
**PCT/JP2022/031341**

(87) International publication number:
**WO 2023/022221 (23.02.2023 Gazette 2023/08)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **20.08.2021  JP 2021135222**

(71) Applicant: **MITSUBISHI GAS CHEMICAL COMPANY, INC.**
**Chiyoda-ku**
**Tokyo 100-8324 (JP)**

(72) Inventor: **SUGIMOTO, Ken**
**Tokyo 125-8601 (JP)**

(74) Representative: **Hoffmann Eitle**
**Patent- und Rechtsanwälte PartmbB**
**Arabellastraße 30**
**81925 München (DE)**

(54) **PACKAGE FOR FRUIT OR VEGETABLE AND METHOD FOR KEEPING FRESHNESS OF FRUIT OR VEGETABLE**

(57)   A fruit and vegetable package includes at least one fruit and/or vegetable (A), at least one atmosphere conditioner package (X), and a packaging material (B) for accommodating them, and the atmosphere conditioner package (X) has an oxygen absorption capacity, a carbon dioxide generation capacity, and a moisture generation capacity.

EP 4 388 882 A1

**Description**

Technical Field

The present invention relates to a fruit and vegetable package and a method for maintaining freshness of fruits and vegetables.

Background Art

Fruits and vegetables are distributed in a state of continuing vital activities even after harvest, and freshness as well as quality is required. The freshness can be classified into appearance (discoloration, wilt, shrinking), mass loss, component change, lesion, and the like.

Factors for maintaining the freshness of fruits and vegetables have been studied by research of the USDA in the United States, as well as the National Research and Development Agency National Agriculture and Food Research Organization (hereinafter referred to as "NARO") and universities in Japan.

For example, as a method for keeping freshness of fruits and vegetables, a method for reducing biological activities within a range in which vital activities can be maintained has been widely performed. Specific examples of such a method for reducing biological activities include refrigeration of fruits and vegetables, adjustment of gas atmosphere such as oxygen or carbon dioxide, and removal of ethylene gas which is a hormone substance, and according to these methods, sugars and acids stored in fruits and vegetables can be maintained at relatively high levels.

In recent years, in addition to the widespread use of refrigerated distribution (cold chain), freshness management by gas atmosphere adjustment has also been performed.

In particular, the gas atmosphere adjustment can be expected to provide a high freshness-maintaining effect by appropriately controlling gas atmosphere. As a preservation method for fruits and vegetables by the gas atmosphere adjustment, controlled atmosphere (CA) preservation in which a gas adjusting device is installed in a warehouse or a container, or modified atmosphere (MA) packaging in which gas exchange by respiration of fruits and vegetables is utilized is used.

What is important here is adjustment and management of the gas atmosphere depending on fruits and vegetables. Depending on varieties, production areas, harvest time, and cultivation methods, fruits and vegetables differ in their growth state and a respiratory amount thereof varies greatly. Thus, it is required to optimize gas atmosphere depending on the fruits and vegetables.

A facility for the CA preservation is large, and thus it is difficult to diversify gas atmosphere to be optimized, leading to an issue that it is impossible to cope with discontinuity of a cold chain.

Meanwhile, the MA packaging can be conducted on a smaller scale compared to the CA preservation and has an advantage that it is easy to optimize gas atmosphere for each fruit and/or vegetable. For example, Patent Document 1 proposes a technique in which (A) a porous polymer film and (B) a non-porous polymer film are used in a fruit and vegetable-containing package formed of a polymer film in which fruits and vegetables are sealed, and an opening area ratio of the (A) is set to a predetermined range.

In addition, fruits and vegetables are usually preferred to be in a state where moisture is sufficiently retained, that is, in a so-called fresh state, and a moisture content is also a criterion for determining commercial values. In general, in the fruit and vegetable market, when 5% or more of moisture of a total weight of fruits and vegetables is lost after harvest, their commercial values are significantly reduced. Accordingly, in addition to the gas atmosphere adjustment, it is also important to take measures to retain moisture. In the technique of Patent Document 1, it is proposed to use a polymer film having a predetermined water vapor permeation rate for the (A) and/or the (B).

Citation List

Patent Document

Patent Document 1: JP H05-168400 A

Summary of Invention

Technical Problem

However, in a case of the fruit and vegetable-containing package as disclosed in Patent Document 1, the function of gas atmosphere adjustment is exhibited only when a respiratory amount and a transpiration amount of water vapor of fruits and vegetables and a ventilation amount and a moisture permeation amount of an isolation film reach an equilibrium state. Thus, it takes a longer time to reach the equilibrium state as compared with use of a dedicated gas atmosphere adjusting device for the CA preservation or the like, and sugar and moisture of fruits and vegetables are lost due to respiration action and evaporation of moisture by then, which is problematic.

In addition, a sufficient effect of suppressing hypoxia disorder and respiration cannot be expected with control using a unified isolation film, and thus it is necessary to optimize the control for each fruit and vegetable. As a result, it is necessary to prepare isolation films of various material types corresponding to the fruits and vegetables. Accordingly, although the MA packaging can be expected to have a freshness-maintaining effect, its actual use is currently limited to those fruits and vegetables that can enjoy mass-production effects, and it is difficult to be incorporated into the distribution of many varieties but in small quantities such as a farmer who cultivates many varieties of fruits and vegetables and Internet sales which have been expanding in recent years, and this leads to a problem that the MA packaging is hindered from becoming popular.

An object of the present invention is to provide a fruit and vegetable package and a method for maintaining freshness of fruits and vegetables, which can easily and quickly adjust the inside of the fruit and vegetable package to a preservation atmosphere (low-oxygen, high-carbon dioxide, and high-humidity atmosphere), which is suitable for fruits and vegetables, and can maintain freshness of fruits and vegetables for a long period of time.

Solution to Problem

That is, the present invention includes the gist constituents as follows.

[1] A fruit and vegetable package including: at least one fruit and/or vegetable (A); at least one atmosphere conditioner package (X); and a packaging material (B) for accommodating the fruit and/or vegetable (A) and the atmosphere conditioner package (X),
in which the atmosphere conditioner package (X) has an oxygen absorption capacity, a carbon dioxide generation capacity, and a moisture generation capacity.

[2] The fruit and vegetable package according to [1] above, in which the atmosphere conditioner package (X) includes an atmosphere conditioner package ($X_{abc}$) having an oxygen absorption capacity, a carbon dioxide generation capacity, and a moisture generation capacity.

[3] The fruit and vegetable package according to [2] above, in which the atmosphere conditioner package ($X_{abc}$) contains at least one selected from the group consisting of an ascorbic acid-based atmosphere conditioner and a polyhydric phenol-based atmosphere conditioner.

[4] The fruit and vegetable package according to any one of [1] to [3] above, in which the fruit and/or vegetable (A) is a broccoli.

[5] The fruit and vegetable package according to any one of [1] to [4] above, in which the packaging material (B) is sealed in such a manner that a part of the packaging material (B) is in an air-permeable state.

[6] A method for maintaining freshness of fruits and vegetables, the method including: a step (I) of obtaining a fruit and vegetable package by accommodating at least one fruit and/or vegetable (A) and at least one atmosphere conditioner package (X) in a packaging material (B); and

a step (II) of maintaining the fruit and vegetable package, in which
in the step (II), the atmosphere conditioner package (X) adjusts an atmosphere in the fruit and vegetable package by absorbing oxygen and generating carbon dioxide and moisture .

[7] The method for maintaining freshness of fruits and vegetables according to [6] above, in which the step (I) includes: a step (I-1) of inserting the fruit and/or vegetable (A) and the atmosphere conditioner package (X) into the packaging material (B) through an opening portion of the packaging material (B); and then a step (I-2a) of sealing the opening portion in an air-permeable state.

[8] The method for maintaining freshness of fruits and vegetables according to [6] or [7] above, in which the step (II) is a step of maintaining the fruit and vegetable package for one day or longer, and
an atmosphere in the fruit and vegetable package after accommodating for one day or longer and two days or shorter satisfies the following Requirements (i) to (iii):

- Requirement (i): an oxygen concentration of 1% or more and 10% or less;
- Requirement (ii): a carbon dioxide concentration of more than 10%; and
- Requirement (iii): a humidity of 80% or more.

[9] The method for maintaining freshness of fruits and vegetables according to any one of [6] to [8] above, in which a maintaining temperature of the fruit and vegetable package in the step (II) is 0°C or higher and 40°C or lower.

Advantageous Effects of Invention

According to the present invention, it is possible to provide a fruit and vegetable package and a method for maintaining freshness of fruits and vegetables, which can easily and quickly adjust the inside of the fruit and vegetable package to a preservation atmosphere that is suitable for fruits and vegetables, and can maintain freshness of fruits and vegetables for a long period of time.

Description of Embodiments

Hereinafter, embodiments of a fruit and vegetable package and a method for maintaining freshness of fruits and vegetables according to the present invention will be described in detail.

Note that in the present specification, a phrase of "A to B" indicating a numerical range means "greater than or equal to A and less than or equal to B" (in the case of A < B), or "less than or equal to A and greater than or equal to B" (in the case of A > B). Furthermore, in the present invention, a combination of preferable aspects is a more preferable aspect.

[Fruit and Vegetable Package]

A fruit and vegetable package according to the present invention includes at least one fruit and/or vegetable (A) (at least one fruit, at least one vegetable, or at least one fruit and at least one vegetable), at least one atmosphere conditioner package (X), and a packaging material (B) for accommodating them, and the atmosphere conditioner package (X) has an oxygen absorption capacity, a carbon dioxide generation capacity, and a moisture generation capacity.

With the configuration described above, the fruit and vegetable package according to the present invention can easily and quickly adjust the inside of the fruit and vegetable package to a preservation atmosphere that is suitable for fruits and vegetables, and maintain freshness of fruits and vegetables for a long period of time.

The reason the fruit and vegetable package of the present invention exhibits the above-described effect is not clear but is assumed to be as follows.

Fruits and vegetables continue vital activities even after harvest, and obtain energies for life support by decomposing respiratory substrates such as sugars or organic acids. A typical respiratory substrate is glucose, which is decomposed into carbon dioxide and water using oxygen obtained by respiration as in the following chemical Formula (I):

$$C_6H_{12}O_6 + 6O_2 \rightarrow 6CO_2 + 6H_2O + 636 \text{ kcal} \cdots \qquad (I)$$

The generated energy is accumulated as a biochemical reaction energy source and is also released as heat. With moderate heat and oxygen, fruits and vegetables actively respire, which progresses consumption of respiratory substrates, thereby decreasing freshness.

In addition, when respiration becomes active, transpiration of moisture from fruits and vegetables also proceeds, which causes wilt and the like.

Accordingly, the preservation atmosphere of fruits and vegetables is preferably in a low-oxygen state. When the preservation atmosphere is set in a low-oxygen state, respiration is suppressed, consumption of the respiratory substrate is suppressed, and respiratory heat is also suppressed.

Carbon dioxide has an effect of suppressing or promoting generation of ethylene, which is one of growth hormones of fruits and vegetables, depending on the concentration of carbon dioxide, a type or a growth stage at the time of harvest of fruits and vegetables. Thus, for fruits and vegetables in which the generation of ethylene gas is suppressed with a higher carbon dioxide concentration, the preservation atmosphere of the fruits and vegetables is preferably in a high-carbon dioxide state. In addition, the higher the carbon dioxide concentration, the more the respiration of the fruits and vegetables can be suppressed. The optimum value of the carbon dioxide concentration in the preservation atmosphere for each fruit and vegetable is disclosed as public information by the above-described USDA in the United States, the NARO, and the like.

The fruit and vegetable package of the present invention includes an atmosphere conditioner package (X), and thus, the atmosphere inside the fruit and vegetable package is easily and rapidly adjusted by the action of the atmosphere conditioner (X). In particular, the atmosphere conditioner (X) has an oxygen absorption capacity, a carbon dioxide generation capacity, and a moisture generation capacity, and thus the preservation atmosphere inside the fruit and vegetable package is adjusted to a low-oxygen, high-carbon dioxide, and high-humidity state to suppress respiration of the fruits and vegetables and effectively suppress transpiration of moisture. Depending on the fruits and vegetables, generation of ethylene gas can also be effectively suppressed. The present invention having such effects is more suitably used when fruits and vegetables are highly sensitive to oxygen and carbon dioxide.

Hereinafter, each component and the like are described.

<Fruit and/or Vegetable (A)>

The fruit and/or vegetable (A) is not particularly limited, but is preferably one that can retain its freshness when stored at a low concentration of oxygen and a high concentration of carbon dioxide, and at high humidity. In particular, the fruit and vegetable package of the present invention is suitable for fruits and vegetables in which generation of ethylene gas is suppressed by coexistence of carbon dioxide. In the fruit and vegetable package of the present invention, an atmosphere conditioner package having an oxygen absorption capacity and a carbon dioxide generation capacity is used, and thus it is possible to rapidly set the preservation atmosphere for the fruits and vegetables to a low-oxygen and high-carbon dioxide atmosphere regardless of the respiration of the fruits and vegetables, whereby generation of ethylene gas can be suppressed while suppressing the respiration of the fruits and vegetables. Accordingly, the fruit and vegetable package of the present invention is suitable for storing such fruits and vegetables.

Specifically, the fruit and vegetable package of the present invention is suitable when the fruit and/or vegetable (A) is a broccoli.

<Atmosphere Conditioner Package (X)>

The atmosphere conditioner package (X) refers to a package in which an atmosphere conditioner (x) is included and at least the atmosphere conditioner (x) is packaged with a packaging material (b), and has a role of easily and quickly adjusting the inside of the fruit and vegetable package to a preservation atmosphere suitable for fruits and vegetables.

The atmosphere conditioner package (X) has an oxygen absorption capacity, a carbon dioxide generation capacity, and a moisture generation capacity.

The fruit and vegetable package includes at least one atmosphere conditioner package (X), and the type and the number of the atmosphere conditioner packages (X) only need to be appropriately adjusted depending on a respiratory amount of fruits and vegetables, a ventilation amount of the fruit and vegetable package, and the like. In addition, when a plurality of atmosphere conditioner packages (X) are used, the plurality of atmosphere conditioner packages (X) only need to exhibit the oxygen absorption capacity, the carbon dioxide generation capacity, and the moisture generation capacity as a whole, and functions of the respective atmosphere conditioner packages (X) may be the same or different.

Specific examples of a case where two or more types of atmosphere conditioner packages (X) having different functions are used in combination include a case <1> where the atmosphere conditioner packages (X) include an atmosphere conditioner package $(X_a)$ having an oxygen absorption capacity, an atmosphere conditioner package $(X_b)$ having a carbon dioxide generation capacity, and an atmosphere conditioner package $(X_c)$ having a moisture generation capacity, a case <2> where the atmosphere conditioner packages (X) include an atmosphere conditioner package $(X_{ab})$ having an oxygen absorption capacity and a carbon dioxide generation capacity, and an atmosphere conditioner package $(X_c)$ having a moisture generation capacity, a case <3> where the atmosphere conditioner packages (X) include an atmosphere conditioner package $(X_{ac})$ having an oxygen absorption capacity and a moisture generation capacity, and an atmosphere conditioner package $(X_b)$ having a carbon dioxide generation capacity, a case <4> where the atmosphere conditioner packages (X) include an atmosphere conditioner package $(X_a)$ having an oxygen absorption capacity, and an atmosphere conditioner package $(X_{bc})$ having a carbon dioxide generation capacity and a moisture generation capacity, and a case <5> where the atmosphere conditioner packages (X) include an atmosphere conditioner package $(X_{abc})$ having an oxygen absorption capacity, a carbon dioxide generation capacity, and a moisture generation capacity, and an atmosphere conditioner package $(X_a)$ having an oxygen absorption capacity.

In a case where two or more types of atmosphere conditioner packages (X) having different functions are combined as described above, the degrees of the oxygen concentration, the carbon dioxide concentration, and the humidity in the fruit and vegetable package can be individually adjusted depending on the combination and the number of each of the atmosphere conditioner packages to be used, which makes it possible to finely and simply adjust a preservation atmosphere more suitable for each fruit and vegetable.

From the viewpoint that the oxygen concentration, the carbon dioxide concentration, and the humidity can be simultaneously controlled by one type of atmosphere conditioner package (X), the atmosphere conditioner (X) preferably includes the atmosphere conditioner package $(X_{abc})$ having an oxygen absorption capacity, a carbon dioxide generation capacity, and a moisture generation capacity. In this case, the atmosphere in the fruit and vegetable package can be adjusted to a desired environment with one type of atmosphere conditioner package (X). Note that as in the case <5> above, when the atmosphere conditioner package $(X_a)$ having an oxygen absorption capacity and the like are further combined, it is also possible to adjust the degrees of the oxygen concentration and the like individually.

In addition, the atmosphere conditioner package (X) is more preferably the atmosphere conditioner package $(X_{abc})$. In this case, it is not necessary to prepare a plurality of types of atmosphere conditioner packages (X), and it is possible to adjust the atmosphere in the fruit and vegetable package to a desired environment only by the atmosphere conditioner package $(X_{abc})$.

(Atmosphere Conditioner (x))

The atmosphere conditioner package (X) includes an atmosphere conditioner (x) and a packaging material (b) for accommodating the atmosphere conditioner (x).

The atmosphere conditioner (x) is not particularly limited, and a known material can be selected and used depending on the function of the atmosphere conditioner package (X). Specific examples thereof include non-iron-based atmosphere conditioners such as ascorbic acid-based atmosphere conditioners and polyhydric phenol-based atmosphere conditioners.

The atmosphere conditioner (x) contains a non-iron-based oxygen-absorbing substance such as ascorbic acids as a main agent, and may contain other components as necessary. Examples of other components include an alkaline substance, a catalyst, a carrier, water, a swelling agent, a heat inhibitor, and an odor adsorbent.

In particular, the atmosphere conditioner (x) preferably contains a non-iron-based oxygen-absorbing substance and at least one selected from the group consisting of an alkaline substance, a catalyst, a carrier, a swelling agent, and water, and more preferably contains a non-iron-based oxygen-absorbing substance, an alkaline substance, a catalyst, and a carrier.

The atmosphere conditioner (x) may be: <1> a composition obtained by mixing the above-described components in a stage before being accommodated in the packaging material (b); or <2> a composition obtained by separately accommodating the above-described components in the packaging material (b) and mixing them in the package.

Non-Iron-Based Oxygen-Absorbing Substance

Examples of the non-iron-based oxygen-absorbing substances include ascorbic acids such as ascorbic acid, an ascorbate, erythorbic acid, (isoascorbic acid), and an erythorbate; and polyhydric phenols such as gallic acid and catechol. These substances may be used alone or in combination of two or more.

In a case where the atmosphere conditioner (x) contains a non-iron-based oxygen-absorbing substance as the main agent, a content of the non-iron-based oxygen-absorbing substance in the atmosphere conditioner (x) is preferably 15 mass% or more and 70 mass% or less, more preferably 45 mass% or more and 65 mass% or less, and even more preferably 45 mass% or more and 60 mass% or less.

<Alkaline Substance>

The alkaline substance is used for the purpose of causing an oxidation reaction of a non-iron-based oxygen-absorbing substance to rapidly proceed and controlling a reaction field in an alkalinity, and examples thereof include carbonates, hydroxides, and salts of weak acids and strong bases. Among them, the alkaline substance is preferably at least one selected from the group consisting of an alkali metal carbonate, an alkali metal hydroxide, and an alkaline earth metal hydroxide. Furthermore, from the viewpoint of solubility in water of a salt formed with a non-iron-based oxygen-absorbing substance such as ascorbic acid, the alkaline substance is more preferably at least one selected from alkali metal carbonates and alkali metal hydroxides.

As the alkali metal carbonate, a water-soluble alkali metal carbonate such as sodium carbonate, sodium hydrogen carbonate, or sodium carbonate hydrate is suitably used, and among them, sodium carbonate is particularly preferable.

Examples of the alkali metal hydroxide include potassium hydroxide and sodium hydroxide, and of these, sodium hydroxide is preferable.

Examples of the alkaline earth metal hydroxide include calcium hydroxide and magnesium hydroxide.

In a case where the atmosphere conditioner (x) contains an alkaline substance, a content of the alkaline substance in the atmosphere conditioner (x) is preferably 5 mass% or more and 20 mass% or less, and more preferably 8 mass% or more and 15 mass% or less.

<Catalyst>

A catalyst has a role of improving an oxygen absorption amount and an oxygen absorption rate, and examples thereof include a transition metal catalyst. When a catalyst is contained, an atmosphere conditioner (x) having a high oxygen absorption capacity can be obtained.

The transition metal catalyst is preferably a transition metal salt.

The transition metal salt is preferably at least one transition metal salt selected from the group consisting of Cu, Fe, Co, Ni, Cr, and Mn, more preferably at least one transition metal salt selected from the group consisting of Mn and Fe, and even more preferably a salt of Fe in consideration of oxygen absorption performance and safety.

As the transition metal salt, for example, an inorganic salt such as a hydrochloride, a sulfate, a chloride, a nitrate, a complex salt, or a hydrate thereof, or an organic salt such as a fatty acid salt or an acetylacetone metal salt can be suitably used, and among them, a sulfate is more preferable.

In a case where the atmosphere conditioner (x) contains a catalyst, a content of the catalyst in the atmosphere conditioner (x) is preferably 2 mass% or more and 10 mass% or less, and more preferably 5 mass% or more and 10 mass% or less.

<Carrier>

A carrier supports the non-iron-based oxygen-absorbing substance and the catalyst and has a role of improving the oxygen absorption amount and the oxygen absorption rate. A configuration in which a carrier is included allows components of the atmosphere conditioner (x) to be granulated and handled as a powder.

Examples of the carrier include: activated carbon; calcium hydroxide; and silicates such as calcium silicate, silica, diatomaceous earth, zeolite, and vermiculite. These substances may be used singly in one kind or in combination of two or more kinds. Among them, activated carbon is preferable.

Activated carbon has not only a role as a carrier but also a function of suppressing generation of odor. Any of wood, coconut shell, coal, and the like may be used as a raw material of activated carbon.

When the atmosphere conditioner (x) contains a carrier, a content of the carrier is preferably 5 parts by mass or more and 25 parts by mass or less, and more preferably 10 parts by mass or more and 20 parts by mass or less, per 100 parts by mass of a non-iron-based oxygen-absorbing substance as the main agent. When the content is in the above range, the oxygen absorption capacity can be obtained and granulation is facilitated. A content of the carrier in the atmosphere conditioner (x) is preferably 1 mass% or more and 20 mass% or less, and more preferably 5 mass% or more and 10 mass% or less.

<Swelling Agent>

A swelling agent is a substance that swells with moisture and has a caking function for retaining a shape of a granulated product, and has a role of improving the oxygen absorption amount and the oxygen absorption rate. The swelling agent is preferably used in a substantially dry state, or in a semi-swollen or swollen state in which a small amount to required amount of water has been absorbed.

The swelling agent is not particularly limited as long as it is a generally known swelling agent, and known swelling agents, binding agents, pressure-sensitive adhesives, and binders, which are used in foods and the like can be used.

Examples of an inorganic swelling agent include clay minerals such as sodium bentonite, calcium bentonite, and sodium montmorillonite. Examples of an organic swelling agent include: organic bentonites; natural products such as defatted frozen bean curd(tofu), agar-agar, starches, dextrin, gum arabic, gelatin, and casein; semi-synthetic products such as crystalline cellulose, carboxymethylcellulose, sodium carboxymethylcellulose, calcium carboxymethylcellulose, hydroxyethylcellulose, lignin sulfonic acid, and hydroxyethylated starches; and synthetic products such as water-insolubilized polyvinyl alcohol and polyvinyl methyl ether. The swelling agents described above can be used singly in one kind, or as required, in combination of two or more kinds. Commercially available products may be used as these swelling agents.

Among the swelling agents described above, at least one selected from the group consisting of clay minerals and cellulose-based semi-synthetic products is preferable.

Clay minerals are preferable because they are inexpensive and excellent in performance. Clay minerals are also known as inorganic soaps and function as lubricants. In addition, it is known that a clay mineral swollen with water exhibits a high thixotropic property and also exhibits a caking property, and thus it is preferable.

The cellulose-based semi-synthetic products exhibit excellent swellability and are preferable.

Among them, bentonites such as calcium bentonite and sodium bentonite, and carboxymethyl cellulose, sodium carboxymethyl cellulose, and calcium carboxymethyl cellulose are preferable because they are inexpensive and have a strong caking force.

In particular, such a swelling agent more preferably contains at least one selected from the group consisting of calcium carboxymethyl cellulose, sodium carboxymethyl cellulose, calcium bentonite, and sodium bentonite.

In a case where the atmosphere conditioner (x) contains a swelling agent, a content of the swelling agent in the atmosphere conditioner (x) is preferably 0.1 mass% or more and 20 mass% or less, more preferably 0.5 mass% or more and 20 mass% or less, even more preferably 0.5 mass% or more and 15 mass% or less, and still even more preferably 0.5 mass% or more and 10 mass% or less.

<Heat Inhibitor>

A heat inhibitor has a role of inhibiting excessive heat generation accompanying progress of an oxygen absorption reaction of the non-iron-based oxygen-absorbing substance (for example, an oxidation reaction of ascorbic acids), and for example, a thermoplastic resin can be used. A kind of the thermoplastic resin is not particularly limited, but for example, polyethylene, polypropylene, an ethylene-vinyl acetate copolymer, an elastomer, or a mixture thereof can be used. In particular, low-molecular weight polyethylene having a molecular weight of 10000 or less, polypropylene, or a mixture thereof is suitably used from the viewpoint that a softening point is easily adjusted and influence of odor is small.

The thermoplastic resin is preferably a granular body having a particle size of 1 $\mu$m or more and 500 $\mu$m or less, and more preferably a granular body having a particle size of 10 $\mu$m or more and 300 $\mu$m or less from the viewpoint of miscibility with other components. A softening point of the thermoplastic resin is preferably 90°C or higher and 125°C or lower from the viewpoint of more effectively suppressing heat generation.

A content of the thermoplastic resin in the atmosphere conditioner (x) is preferably 35 parts by mass or more and 300 parts by mass or less and more preferably 60 parts by mass or more and 200 parts by mass or less, per 100 parts by mass of the ascorbic acids from the viewpoint of promoting the oxidation reaction of the ascorbic acids.

In a case where the atmosphere conditioner (x) contains a heat inhibitor, a content of the heat inhibitor in the atmosphere conditioner (x) is preferably 35 parts by mass or more and 300 parts by mass or less, and more preferably 60 parts by mass or more and 200 parts by mass or less, per 100 parts by mass of the non-iron-based oxygen absorbing substance.

The atmosphere conditioner package ($X_{abc}$) having an oxygen absorption capacity, a carbon dioxide generation capacity, and a moisture generation capacity preferably contains at least one selected from the group consisting of an ascorbic acid-based atmosphere conditioner and a polyhydric phenol-based atmosphere conditioner. Each of the ascorbic acid-based atmosphere conditioner and the polyhydric phenol-based atmosphere conditioner can exhibit an oxygen absorption capacity, a carbon dioxide generation capacity, and a moisture generation capacity even when it is of one type. Among them, from the viewpoint of an oxygen absorption capacity and a carbon dioxide generation capacity, it is more preferable to contain an ascorbic acid-based atmosphere conditioner.

(Ascorbic Acid-Based Atmosphere Conditioner)

The ascorbic acid-based atmosphere conditioner preferably contains at least one selected from the group consisting of ascorbic acid, an ascorbate, an ascorbic acid ester, erythorbic acid, an erythorbate, and an erythorbic acid ester, and preferably further contains an alkaline substance, a catalyst, and water. For example, an atmosphere conditioner containing at least one selected from the group consisting of ascorbic acid, an ascorbate, an ascorbic acid ester, erythorbic acid, an erythorbate, and an erythorbic acid ester, an alkaline substance, a catalyst, water, a carrier, and a swelling agent can be suitably used.

Such an ascorbic acid-based atmosphere conditioner allows the inside of the fruit and vegetable package to be quickly brought into a low-oxygen, high-carbon dioxide, and high-humidity state by utilizing an oxidation reaction of the ascorbic acids and generation of carbon dioxide as a degradant during the reaction.

Examples of the ascorbate include sodium ascorbate.

Examples of the ascorbic acid ester include ascorbyl stearate, ascorbyl palmitate, and ascorbic acid 2-glucoside.

Examples of the erythorbate include sodium erythorbate.

Note that the other components are as described above.

(Polyhydric Phenol-Based Atmosphere Conditioner)

The polyhydric phenol-based atmosphere conditioner contains at least one selected from a gallic acid and catechol as a main agent, and preferably further contains an alkaline substance.

Such a polyhydric phenol-based atmosphere conditioner allows the inside of the fruit and vegetable package to be quickly brought into a low-oxygen, high-carbon dioxide, and high-humidity state by utilizing an oxidation reaction of the polyhydric phenol and generation of carbon dioxide as a degradant during the reaction.

Note that respective components are as described above.

(Content of Atmosphere Conditioner)

A content of the atmosphere conditioner in the fruit and vegetable package can be selected and determined in comprehensive consideration of a respiratory amount of the fruit and vegetable, a gas permeation amount of the fruit and vegetable package, performance of the atmosphere conditioner (for example, oxygen absorption rate), an intended storage period, and the like. The details are as follows.

In the fruit and vegetable package of the present invention, it is necessary to adjust the inside of the fruit and vegetable package to a gas balance suitable for storage depending on the fruits and vegetables.

Such a gas balance can be designed on the basis of <1> the respiratory amount of the fruit and vegetable, <2> the gas permeation amount of the fruit and vegetable package, and <3> a gas adjustment amount by the atmosphere conditioner.

<1> Respiratory Amount (q) of Fruit and Vegetable

The respiratory amount per unit weight of the fruit and vegetable can be calculated by obtaining a respiration rate by a Gore equation presented in the following equation (1):

$$Q = a \times 10^{b \cdot T} \cdots (1)$$

In the above equation (1), Q represents a respiration rate, T represents a temperature, and a and b represent respiration rate constants. The respiration rate constants a and b vary depending on a type of a fruit and vegetable. A temperature constant can be represented by $10^{b \cdot T}$.

The respiration rate constants (a, b) and temperature constant ($10^{b \cdot T}$) per unit weight of a fruit and vegetable are disclosed by the NARO and the like.

Note that the respiratory amount of a fruit and vegetable varies depending on a variety and a production area, and thus it is preferable to actually measure the respiratory amount to obtain an equation with higher accuracy.

<2> Gas Permeation Amount (p) of Fruit and Vegetable Package

To suppress respiration disorder of fruits and vegetables, it is necessary to set the gas permeation amount (p) of the fruit and vegetable package to a value that is larger than the respiratory amount (q) of the fruit and vegetable (a value obtained by multiplying the above Q by a weight of the fruit and vegetable) (p > q). In a case where the gas permeation amount (p) of the fruit and vegetable package is larger than the respiratory amount (q) of the fruit and vegetable, a partial pressure in the fruit and vegetable package can be controlled to be in an equilibrium state.

An approximate value of the gas permeation amount of the packaging material (B) can be obtained from a material, a thickness, an area, and the like of the packaging material (B) at each temperature and partial pressure, but in a case of a known material, a literature value or a measurement result of a manufacturer may be referred to. For example, in a case where a packaging material having air permeability is sealed and used as the packaging material (B), the gas permeation amount of the packaging material (B) is the gas permeation amount (p) of the fruit and vegetable package.

The gas permeation amount (p) of the fruit and vegetable package is determined by the gas permeation amount of the packaging material (B) and the packaging state. For example, when a packaging material having no air permeability (impermeable packaging material) is used as the packaging material (B) and sealed in an air-permeable state, it is preferable to actually measure the gas permeation amount (p) of the fruit and vegetable package.

<3> Gas Adjustment Amount (r) by Atmosphere Conditioner

In the method for maintaining freshness of fruits and vegetables according to the present invention, it is necessary to construct a design in which adjustment is performed in such a manner that the gas permeation amount (p) of the fruit and vegetable package - the respiratory amount (q) of the fruit and vegetable - the gas adjustment amount (r) by the atmosphere conditioner is a positive value (p - q - r > 0), whereby a target gas partial pressure can be maintained.

The gas adjustment amount (r) by the atmosphere conditioner can be represented by an Arrhenius equation with respect to the temperature, and a value of gas absorption/release for each partial pressure can be represented by exponential approximation ($r = ae^{bt}$) with respect to the elapsed time. Here, a and b are the respiration rate constants per unit weight of a fruit and vegetable as described above, and t is the elapsed time. The integrated maximum gas adjustment amount can be adjusted by an amount of the bulk powder (an amount of the atmosphere conditioner), and the inclination can be adjusted by the gas permeation amount (a) of the packaging material of the atmosphere conditioner.

Note that the atmosphere conditioner is gradually deactivated, and thus it is preferable to appropriately select an amount of the atmosphere conditioner to be used depending on an intended storage period.

According to the above calculation, the optimum atmosphere conditioner and the amount thereof to be used are selected and designed for the storage period of the fruit and vegetable.

(Packaging Material (b))

The atmosphere conditioner package (X) includes the packaging material (b) accommodating the atmosphere conditioner (x) described above.

A packaging material for the packaging material (b) is not particularly limited as long as it is used for the atmosphere conditioner, but it is preferable to use a packaging material having high air permeability from the viewpoint of sufficiently achieving oxygen absorption performance. Examples thereof include a packaging material having a bag shape formed by bonding two sheets of an air-permeable packaging material to each other, a packaging material having a bag shape formed by bonding one sheet of an air-permeable packaging material and one sheet of a non-air-permeable packaging material to each other, and a packaging material having a bag shape formed by folding one sheet of an air-permeable packaging material and sealing edges other than the folded portion.

Here, when the air-permeable packaging material and the non-air-permeable packaging material each have a quadrilateral shape, examples of the packaging material (b) include a packaging material having a bag shape formed by overlapping two sheets of an air-permeable packaging material and heat-sealing their four sides, a packaging material having a bag shape formed by overlapping one sheet of an air-permeable packaging material and one sheet of a non-air-permeable packaging material and heat-sealing their four sides, and a packaging material having a bag shape formed by folding one sheet of an air-permeable packaging material and heat-sealing its three sides other than the folded portion. Furthermore, the packaging material (b) may be a packaging material having a bag shape formed by forming an air-permeable packaging material into a tubular shape and heat-sealing both ends and the trunk portion of the resulting tubular body.

The shape of the packaging material (b) is preferably one selected from the group consisting of a bag shape, a three-sided seal shape, a four-sided seal shape, a stick shape, a cylindrical shape, and a box shape, and is more preferably at least one selected from the group consisting of a bag shape, a stick shape, a cylindrical shape, and a box shape.

In a case where the packaging material (b) has a bag shape or a three-sided seal shape, the size thereof is, for example, 10 mm or more and 120 mm or less by 10 mm or more and 120 mm or less.

<Air-Permeable Packaging Material>

As the air-permeable packaging material, especially a packaging material through which oxygen, carbon dioxide, and water vapor permeate is selected. Examples thereof include papers such as Japanese paper, foreign paper, and rayon paper; nonwoven fabrics using various fibers such as pulp, cellulose, and fibers made of synthetic resins; plastic films or perforated products thereof; microporous films obtained by adding calcium carbonate or the like and then stretching; and laminates obtained by laminating two or more types selected from these.

Examples of the plastic films include a laminate film produced by laminating and bonding a film of polyethylene terephthalate, polyamide, polypropylene, polycarbonate, or the like, and a film of polyethylene, an ionomer, polybutadiene, ethylene acrylic acid copolymer, ethylene methacrylic acid copolymer, ethylene vinyl acetate copolymer, or the like as a sealing layer.

As such an air-permeable packaging material, a laminate of a porous polyethylene film and paper, a nonwoven fabric made of polyethylene, or a laminate of a nonwoven fabric and a microporous film is preferable.

Of these, a packaging material having an air permeability resistance of 600 seconds or less, more preferably 90 seconds or less by a Gurley tester method is suitably used as the air-permeable packaging material. Here, the air permeability resistance refers to a value measured by a method in accordance with JIS P 8117 (1998). More specifically, it refers to a time period required for 100 mL of air to permeate through an air-permeable packaging material using a Gurley densometer available from Toyo Seiki Seisaku-sho, Ltd.

As the method of imparting air permeability, various methods can be employed, in addition to punching with a cold needle or a heat needle. When air permeability is imparted by punching, the air permeability can be freely adjusted by a material, and a diameter, the number and the like of holes to be punched.

A thickness of the laminate film is preferably 50 $\mu$m or more and 300 $\mu$m or less, and particularly preferably 60 $\mu$m or more and 250 $\mu$m or less. In this case, as compared to a case where the thickness deviates from the range described above, the packaging material can be a packaging material that retains strength and has an excellent heat sealing property and packaging suitability.

<Non-Air-Permeable Packaging Material>

Examples of the non-air-permeable packaging material include a packaging material having an aluminum foil or the like. For example, in a case where an air-permeable packaging material is used on one side of the atmosphere conditioner package (X) and a packaging material having no air permeability is used on the other side, oxygen can be absorbed from only one side.

The packaging material (b) accommodates the above-described atmosphere conditioner and other components to be added as necessary as contents, and amounts of these to be accommodated are not particularly limited and can be appropriately adjusted depending on usage of the atmosphere conditioner package, and the like. For example, from the viewpoint of versatility, oxygen absorption performance, a carbon dioxide generation capacity, a moisture generation capacity, and productivity of the atmosphere conditioner package, the amount of the contents per one atmosphere conditioner package (X) is preferably 0.1 g or more and 100 g or less, more preferably 0.5 g or more and 50 g or less, even more preferably 1 g or more and 20 g or less, and still even more preferably 3 g or more and 10 g or less.

<Packaging Material (B)>

The packaging material (B) accommodates the fruit and/or vegetable (A) and the atmosphere conditioner package (X) and serves as a separation film between the inside and the outside of the fruit and vegetable package.

The packaging material (B) is not particularly limited as long as it can accommodate the fruit and/or vegetable (A) and the atmosphere conditioner package (X) and can isolate the inside and the outside of the fruit and vegetable package from each other, and a packaging material having air permeability or a packaging material having no air permeability can be used.

(Packaging Material Having Air Permeability)

The packaging material having air permeability may be appropriately selected from known packaging materials having air permeability depending on a target gas permeation amount (air permeation amount), and may be a non-porous film or a porous film as long as it has appropriate air permeability.

Examples of the non-porous film having air permeability include papers, non-woven fabrics using various fibers, microporous films, and laminates obtained by laminating two or more types selected from them, which have desired air permeability.

Examples of the porous film include a perforated product obtained by subjecting the non-porous film having air permeability to perforation treatment, a perforated product obtained by subjecting a packaging material having no air permeability to perforation treatment, which will be described below, and a laminate thereof.

Among them, from the viewpoint of easy control of the gas permeation amount, a perforated product obtained by subjecting a packaging material having no air permeability to perforation treatment, which will be described below, is preferable, a perforated product obtained by subjecting a resin film to perforation treatment, which will be described below, is more preferable, and among them, porous polypropylene, porous polyethylene, or the like can be suitably used.

In a case where the packaging material (B) is a porous film, the surface of the packaging material (B) may have through-holes from the viewpoint of imparting appropriate air permeability. Examples of such through-holes include fine holes formed using a laser, holes formed using punching, and the like.

(Packaging Material Having No Air Permeability)

The packaging material having no air permeability may be appropriately selected from known non-air-permeable packaging materials, and specifically, a non-porous film having no air permeability can be suitably used.

Examples of the non-porous film having no air permeability include a resin film which is not subjected to perforation treatment, and a laminate of the resin film and the non-porous film having air permeability, regardless of presence or absence of a gas barrier property.

Examples of the resin film include a single-layer film of polyethylene terephthalate, polyamide, polypropylene, polycarbonate, polyethylene, an ionomer, polybutadiene, ethylene/acrylic acid copolymer, ethylene/methacrylic acid copolymer, ethylene/vinyl acetate copolymer, or the like, and a laminate film obtained by laminating and bonding two or more selected from the group consisting of these. Among them, resin films of polypropylene, polyethylene, and the like, which are available at a low cost, can be suitably used.

In a case where an appropriate air permeability is secured for the fruit and vegetable package by a degree of sealing at the time of bundling the packaging material (B), the number and size of punching holes after sealing, a partial sealing method in which a gap is provided in a heat-sealed portion, or the like, the packaging material (B) is preferably a non-porous film having no air permeability from the viewpoint of easy control of the gas permeation amount.

The thickness, shape, size, and the like of the packaging material (B) are not particularly limited, and may be appropriately selected depending on the size, number and weight of the fruit and/or vegetable (A) to be accommodated, the size of a distribution container for accommodating the fruit and vegetable package, and the like.

The thickness of the packaging material (B) is, for example, 10 $\mu$m or more and 500 mm or less, preferably 20 $\mu$m or more and 400 $\mu$m or less, and more preferably 20 $\mu$m or more and 100 $\mu$m or less, from the viewpoint of strength and availability.

Examples of the shape of the packaging material (B) include a bag shape, a tubular shape, a sheet shape, and a box shape. In a case where the packaging material (B) has a bag shape or a tubular shape, an opening portion (both ends in a case of the tubular shape) can be bundled or sealed for use in a state where the fruit and/or vegetable (A) and the atmosphere conditioner package (X) are accommodated therein. In a case where the packaging material (B) has a sheet shape, the fruit and/or vegetable (A) and the atmosphere conditioner package (X) can be wrapped to be accommodated therein, and the ends of the packaging material (B) can be bundled or sealed. Among them, the bag shape is preferable from the viewpoint of ease of accommodating the fruit and/or vegetable (A) and the like.

For example, in a case where the packaging material (B) has a bag shape, as the size of the packaging material (B), preferably, the width is 250 mm or more and 550 mm or less, and the length is 400 mm or more and 550 mm or less.

The fruit and vegetable package of the present invention is preferably in an air-permeable state between the inside and the outside thereof. This makes it possible to perform appropriate ventilation (gas exchange) between the inside and the outside of the fruit and vegetable package.

When the fruit and vegetable package can perform appropriate ventilation between the inside and the outside thereof, it is possible to suppress deterioration of freshness due to anaerobic respiration of fruits and vegetables and an after-ripening action due to increase in ethylene gas concentration in the system, and it is possible to cope with vacuum pre-cooling which is a main force in the cold chain widely used in distribution of fruits and vegetables.

Here, the air-permeable state of the fruit and vegetable package refers to a state in which gas exchange is possible between the inside and the outside of the fruit and vegetable package. Examples of the exchangeable gas include oxygen, carbon dioxide, water vapor, and ethylene gas.

The term "appropriate ventilation" means that gas exchange is performed between the inside and the outside of the fruit and vegetable package in such a manner that the gas balance in the fruit and vegetable package becomes equal to or close to the optimum gas atmosphere (gas concentration) of each fruit and vegetable disclosed by the above-described USDA in the United States, the NARO, and the like.

The method for bringing the fruit and vegetable package into an air-permeable state is not particularly limited, and selection and adjustment can be appropriately performed depending on a target gas permeation amount (p) of the fruit and vegetable package. Specific examples thereof include a method for packaging the fruit and/or vegetable (A) and the like using a porous film having desired air permeability and a method for sealing the packaging material (B) in such a manner that a part of the packaging material (B) is in an air-permeable state.

Here, the gas permeation amount (p) of the fruit and vegetable package is determined by the gas permeation amount of the packaging material (B) and the packaging state. Here, the gas permeation amount of the packaging material (B) is affected by a gas partial pressure difference between the inside and the outside of the fruit and vegetable package. The gas partial pressure difference between the inside and the outside of the fruit and vegetable package is affected by the respiratory amount (q) of the fruits and vegetables, the gas adjustment amount (r) by the atmosphere conditioner, the packaging state, and the like, and thus it is preferable to actually measure the gas partial pressure difference for each fruit and vegetable package.

In the fruit and vegetable package, the packaging material (B) is preferably sealed in such a manner that a part of the packaging material (B) is in an air-permeable state. This makes it possible to perform appropriate ventilation between the inside and the outside the fruit and vegetable package.

The method for sealing the packaging material (B) in such a manner that a part of the packaging material (B) is in an air-permeable state is not particularly limited, and examples thereof include: simple sealing such as a method in which the opening portion of the packaging material (B) having a bag shape is loosely bundled and fastened with a binding member such as a clip, a rubber band, a binding tape, or a string; and a method in which the opening portion is fastened by a partial sealing manner with a gap at the time of heat-sealing; and a method in which the packaging material (B) is sealed and punched to ensure air permeability. In such methods, the packaging material (B) is preferably a non-porous film having no air permeability from the viewpoint of easy control of the gas permeation amount.

The air-permeable state is preferably a state having slight air permeability. Excessive gas exchange does not occur in a state of having slight air permeability, and thus the atmosphere adjustment effect by the atmosphere conditioner package (X) is sufficiently exhibited.

In the present specification, the state of having slight air permeability refers to slight air permeability in such an extent that appropriate ventilation can be performed between the inside and the outside of the fruit and vegetable package, and for example, refers to a sealed state in such an extent that the opening portion of the packaging material (B) made of a non-porous film having no air permeability is loosely bundled and fastened with a binding member such as a rubber band.

For example, when the opening portion of the packaging material (B) made of a non-porous film having no air permeability is tightly bundled, folded, and fastened, air permeability cannot be secured, but when the opening portion is loosely bundled and fastened with a rubber band, slight air permeability can be secured.

A degree of air permeability (gas permeation amount) can be appropriately adjusted by a type of the binding member, tightness of the bundling, presence or absence of folding of the opening portion of the packaging material, and the like.

The binding member is not particularly limited, but is preferably a rubber band in terms of having appropriate elasticity. In a case of fastening with a rubber band, the gas permeation amount can be adjusted by one round fastening or two round fastening, but two round fastening is preferable from the viewpoint of slighter air permeability.

Further, from the viewpoint of slighter air permeability, the opening portion is preferably loosely bundled, folded, and fastened.

Note that the gas permeation amount can be grasped by actually measuring the gas permeation amount (p) of the fruit and vegetable package by the following method, for example.

Table 1 indicates measured values of gas permeation amounts in a case where packages were prepared using a non-porous film having no air permeability and a porous film having air permeability. Note that measurement was conducted by the following procedure.

(Measurement of Gas Permeation Amount)

First, a mixed gas containing 5% of oxygen, 20% of carbon dioxide, and 75% of nitrogen was prepared. Note that in the present specification, "%" representation of a gas concentration means "% by volume".

Next, 3000 mL of the mixture gas was enclosed in each bag presented in Table 1, and the opening portion of the bag was sealed by the method presented in Table 1 to obtain a package.

Within 10 minutes after sealing, oxygen and carbon dioxide concentrations in the package were measured and the measured values were used as initial values. Subsequently, the package was stored in an atmosphere at a temperature of 25 ± 1°C and a humidity of 55 ± 5%RH for 4 hours. Thereafter, the oxygen and carbon dioxide concentrations in the package were measured again, and the measured values were used as values after 4 hours.

On the assumption that nitrogen was not permeated, an amount of change of each gas was determined from the initial value and the value after 4 hours, and this was taken as amounts of oxygen and carbon dioxide permeated. The oxygen and carbon dioxide concentrations were measured using a gas analyzer ("Check Mate 3" available from MOCON, Inc.). The measurement was conducted by inserting a hollow needle at the tip of a silicon tube for sampling attached to the gas analyzer into a rubber sheet for sampling previously attached to the surface of the package and measuring each concentration.

In Table 1, "antifog OPP" indicates an antifog OPP bag (biaxially stretched polypropylene, available from SHIMOJIMA Co., Ltd., 0.02 mm thick, 300 mm wide, 450 mm long), and "PE" indicates a PE bag (polyethylene, available from SHIMOJIMA Co., Ltd., 0.03 mm thick, 300 mm wide, 450 mm long), all of which are examples of a non-porous film having no air permeability. "Porous OPP" indicates a porous OPP bag (biaxially stretched polypropylene, available from SHIMOJIMA Co., Ltd., 0.02 mm, 300 mm wide, 315 mm long) and is an example of a porous film having air permeability.

In Table 1, "Heat seal" indicates that the opening portion of the bag was completely sealed by heat sealing, "Tightly bundled, folded, and fastened with a rubber band wrapped two times" indicates that the opening portion of the bag was tightly bundled, folded, and then fastened by wrapping a rubber band two times, "Fastened with a rubber band wrapped two times" indicates that the opening portion of the bag was loosely bundled and fastened by wrapping a rubber band two times without folding, and "Fastened with a rubber band wrapped one time" indicates that the opening portion of the bag was loosely bundled and fastened by wrapping a rubber band one time without folding.

[Table 1]

Table 1 [Gas permeation amount per bag]

| Packaging material | Thickness | Width | Length | Sealing method | Gas permeation amount (mL/d·atm·25°C) | | Gas permeation amount (mL/m²·d·atm·25°C) | |
|---|---|---|---|---|---|---|---|---|
| | | | | | Oxygen | Carbon dioxide | Oxygen | Carbon dioxide |
| Antifog OPP | 0.02 | 300 | 450 | Heat seal | 67 | 270 | 248 | 1000 |
| | | | | Tightly bundled, folded, and fastened with a rubber band wrapped two times | 68 | 271 | 252 | 1004 |
| | | | | Fastened with a rubber band wrapped two times | 96 | 449 | 356 | 1663 |
| | | | | Fastened with a rubber band wrapped one time | 200 | 559 | 741 | 2070 |
| PE | 0.03 | 300 | 450 | Heat seal | 154 | 365 | 570 | 1352 |
| | | | | Tightly bundled, folded, and fastened with a rubber band wrapped two times | 168 | 370 | 622 | 1370 |
| | | | | Fastened with a rubber band wrapped two times | 219 | 1137 | 811 | 4211 |
| | | | | Fastened with a rubber band wrapped one time | 221 | 1151 | 819 | 4263 |
| Porous OPP | 0.02 | 300 | 315 | Heat seal | 557 | 800 | 2947 | 4233 |

As presented in Table 1, in the case of all using non- porous film having no air permeability, it was confirmed that the gas permeation amounts of oxygen and carbon dioxide were large in the "fastened with a rubber band wrapped one time" and the "fastened with a rubber band wrapped two times" as compared with the "heat sealing" of complete sealing and the "folded and fastened with a rubber band wrapped two times" in which the opening portion of the bag is tightly bundled, folded, and fastened. In addition, it was confirmed that the gas permeation amounts of oxygen and carbon dioxide were smaller in the case of "fastened with a rubber band wrapped two times" than in the case of "fastened with a rubber band wrapped one time".

Further, it was confirmed that in a case where the porous film was used, the permeation amount of oxygen was the largest.

In the fruit and vegetable package of the present invention, from the viewpoint that excessive gas exchange does not occur and the inside of the fruit and vegetable package is easily adjusted to the optimum gas atmosphere suitable for the fruit and vegetable, in a case where the packaging material (B) is a bag-shaped packaging material made of a non-porous film having no air permeability, it is preferable that the bag is sealed in a state where a part of the bag has slight air permeability, and more specifically, it is more preferable that the opening portion of the bag is loosely bundled and fastened with a rubber band, and it is even more preferable that the fastening with a rubber band is fastening with a rubber band wrapped two times. Further, from the viewpoint of slighter air permeability, it is preferable that the opening portion of the bag is loosely bundled, folded, and fastened with a rubber band.

The MA state is exhibited in the packaging material (B), and thus the fruit and vegetable package of the present invention can be stored singly or a plurality of the fruit and vegetable packages can be stored in combination in a packing material (in a distribution container) such as a cardboard or a plastic container.

In the fruit and vegetable package of the present invention, gas atmosphere control close to the CA preservation can be performed in a size of about a corrugated cardboard box for distribution (for example, the total of a length, a width, and a depth of the box is about 800 mm or more and 1600 mm or less), and thus it is possible to diversify gas atmospheres to be optimized as compared with gas adjustment in units of containers as in the CA preservation. In particular, the gas balance is adjusted by the atmosphere conditioner (X), and thus even when the optimum storage environment varies depending on species of fruits and vegetables, a production area, a harvest time, and the like, it is possible to flexibly cope with the variation.

[Method for Maintaining Freshness of Fruits and Vegetables]

The fruit and vegetable package of the present invention having the above-described configuration can easily and quickly adjust the inside of the fruit and vegetable package to a preservation atmosphere that is suitable for fruits and vegetables, and can maintain freshness of fruits and vegetables for a long period of time.
The method for maintaining freshness of fruits and vegetables of the present invention includes a step (I) of obtaining a fruit and vegetable package by accommodating at least one fruit and/or vegetable (A) and at least one atmosphere conditioner package (X) in a packaging material (B), and a step (II) of maintaining the fruit and vegetable package, where in the step (II), the atmosphere conditioner package (X) adjusts an atmosphere in the fruit and vegetable package by absorbing oxygen and generating carbon dioxide and moisture.

<Step (I)>

First, the method for maintaining freshness of fruits and vegetables of the present invention includes a step of obtaining a fruit and vegetable package by accommodating at least one fruit and/or vegetable (A) and at least one atmosphere conditioner package (X) in a packaging material (B).
By the present step, the above-described fruit and vegetable package can be obtained. Note that the fruit and/or vegetable (A), the atmosphere conditioner package (X), and the packaging material (B) are as described above.
Here, the step (I) preferably includes: a step (I-1) of inserting the fruit and/or vegetable (A) and the atmosphere conditioner package (X) into the packaging material (B) through an opening portion of the packaging material (B); and then a step (I-2a) of sealing the opening portion in an air-permeable state. When the opening portion is sealed in an air-permeable state, appropriate ventilation can be performed between the inside and the outside of the fruit and vegetable package.
The packaging material (B) to be used at this time is not particularly limited, but is preferably a non-air-permeable packaging material, and more preferably a non-porous film having no air permeability, from the viewpoint that a gas permeation amount is easily controlled by a degree of sealing.
Examples of the method for sealing in an air-permeable state include simple sealing as exemplified above. Above all, it is preferable to bundle the opening portion in an air-permeable state.
The air-permeable state is preferably a state having slight air permeability. Excessive gas exchange does not occur in a state of having slight air permeability, and thus the atmosphere adjusting effect by the atmosphere conditioner package (X) is sufficiently exhibited.
In a case where the packaging material (B) is a packaging material having air permeability, particularly a porous film having appropriate air permeability, a step (I-2b) of sealing the opening portion may be performed instead of the step (I-2a). When the packaging material (B) has appropriate air permeability, appropriate ventilation can be performed between the inside and the outside the fruit and vegetable package even when the opening portion is sealed.
The method for sealing the opening portion is not particularly limited, and examples thereof include ultrasonic sealing and heat sealing.

<Step (II)>

The method for maintaining freshness of fruits and vegetables according to the present invention further includes a step (II) of maintaining the fruit and vegetable package obtained in the step (I).
By the present step, the inside of the fruit and vegetable package can be adjusted to a preservation atmosphere that is suitable for the fruits and vegetables, and freshness of the fruits and vegetables can be maintained for a long period of time.
According to the method for maintaining freshness of fruits and vegetables of the present invention, a preservation atmosphere suitable for storage of fruits and vegetables can be achieved in a short period of time as compared with the MA preservation in the related art. Specifically, when the fruit and vegetable package is maintained for one day or longer, an optimum preservation atmosphere for the fruits and vegetables can be realized.
Here, examples of the optimum preservation atmosphere for fruits and vegetables include the following Requirements (i) to (iii):

· Requirement (i): an oxygen concentration of 1% or more and 10% or less;
· Requirement (ii): a carbon dioxide concentration of more than 10%; and
· Requirement (iii): a humidity of 80% or more.

When the oxygen concentration inside the fruit and vegetable package is lowered, respiration of the fruits and vegetables can be suppressed. However, when the inside of the fruit and vegetable package is in a low-oxygen state in which an amount of oxygen is lower than that required for the fruits and vegetables, the fruits and vegetables are switched to an anaerobic respiration called hypoxia disorder, and volatile components such as acetaldehyde and ethanol are generated. These volatile components cause odor, and when accumulated in tissues of the fruits and vegetables, they cause discoloration, leading to deterioration in quality and freshness of the fruits and vegetables. The oxygen concentration at which transition to the anaerobic respiration occurs varies depending on the fruits and vegetables, but is generally less than 1%. Thus, when the oxygen concentration is in a range of 1% or more and 10% or less, the living state of the fruits and vegetables can be maintained while suppressing the respiration of the fruits and vegetables. From such a viewpoint, the oxygen concentration is more preferably 1% or more and 5% or less.

In addition, when the carbon dioxide concentration inside the fruit and vegetable package increases due to gas exchange caused by the respiration of the fruits and vegetables, the respiratory amount of the fruits and vegetables is affected. Although the optimum conditions vary depending on ecology of fruits and vegetables, a growth stage at the time of harvest, and the like, in a case of fruits and vegetables having high sensitivity to carbon dioxide (particularly a fruit and vegetable which easily generates ethylene gas due to coexistence of carbon dioxide), respiration of the fruits and vegetables and/or generation of ethylene gas can be suppressed by setting the carbon dioxide concentration inside the fruit and vegetable package to more than 10%, whereby aging of the fruits and vegetables can be suppressed. The carbon dioxide concentration is preferably 25% or less because fermentation of fruits and vegetables proceeds when the carbon dioxide concentration is too high.

In addition, when humidity inside the fruit and vegetable package is 80%RH or more, drying of the fruits and vegetables can be suppressed. From such a viewpoint, the humidity is more preferably 85%RH or more. The upper limit of the humidity is not particularly limited, and may be 100%RH.

Note that the oxygen concentration, carbon dioxide concentration, and humidity inside the fruit and vegetable package can be measured by methods described in Examples.

The maintaining temperature of the fruit and vegetable package in the step (II) is not particularly limited, but is preferably 0°C or higher and 40°C or lower. In the MA preservation in the related art, refrigeration preservation is common, and there is no preservation method capable of preservation in a wide temperature range from refrigeration to room temperature. According to the method for maintaining freshness of fruits and vegetables of the present invention, it is possible to maintain freshness of fruits and vegetables even at a room temperature (for example, 15°C or higher and 25°C or lower), and thus it is possible to cope with discontinuity of the cold chain.

Although the embodiments of the present invention have been described above, the present invention is not limited to the above-described embodiments, and includes all aspects included in the concept of the present invention and the scope of the claims, and can be various modified within the scope of the present invention.

Examples

Hereinafter, the present invention will be described in further detail with reference to examples, but the present invention is not limited to these examples. Various measurements and evaluations in Production Examples, Examples, and Reference Examples were performed as follows.

<Average Particle Size of Iron Powder>

As the average particle size of the iron powder, an average particle size (D50) of a cumulative frequency of 50% was determined by the weight fractions in accordance with the mesh sizes of standard sieves after subjecting the particles to vibration for 5 minutes using the standard sieves conforming to ISO 3310-1:2000 (corresponding to JIS Z8801-E2006).

<Oxygen and Carbon Dioxide Concentrations>

The oxygen and carbon dioxide concentrations were measured using a gas analyzer ("Check Mate 3" available from MOCON, Inc.).

The measurement was performed as follows: an upper portion of a lid of the packing material was opened, and a hollow needle at the tip of a silicon tube for sampling attached to the gas analyzer was inserted into a rubber sheet for sampling previously attached to the surface of the fruit and vegetable package to measure each concentration on each storage day. Note that after the measurement, the upper portion of the lid of the packing material was quickly resealed to suppress influence of photosynthesis.

<Humidity>

The humidity was measured using a thermo-hygrometer ("AD-5663-01" available from A&D Company, Limited).

The measurement was performed as follows: the thermo-hygrometer was previously inserted together with a fruit and vegetable when the fruit and vegetable was accommodated in the packaging material, and a value of humidity was read on each storage day.

<Weight Change Percentage>

The weight change percentage was determined by the following procedure.

First, in a stage before preparing the fruit and vegetable package, a surface of the fruit and vegetable was wiped off with KIMTOWEL (a paper wiper), and a weight ($W_0$) of the fruit and vegetable was measured using an electronic balance (unit: 1/100 gram).

Next, when the measurement sample was accommodated in the packing material, a weight including the packing material ($W_1$) was measured, and defined as the starting point of the weight measurement (Wi).

Thereafter, the weight including the packing material ($W_x$) was measured on each storage day, a change weight from the starting point ($W_1 - W_x$) was determined, and a weight change percentage (%) was determined by the following equation (2) with the weight of the fruit and vegetable ($W_0$) initially determined as the denominator.

When the weight change percentage exceeded 5%, it was determined as "NG" (meaning "Not Good" or "Poor", the same applies hereinafter).

$$\text{Weight change percentage (\%)} = [\text{initial weight including packing material } (W_1) - \text{weight including packing material during storage } (W_x)] \times 100/\text{initial weight of fruit and vegetable } (W_0) \tag{2}$$

<Appearance>

The appearance was evaluated by visually observing an image taken with a digital camera ("PowerShot PSSX70HS" available from Canon Inc.).

An upper portion of a lid of the packing material was opened, the digital camera was placed on a fixed camera platform, and photographing was immediately performed. After photographing, the upper portion of the lid of the packing material was quickly resealed to suppress influence of photosynthesis.

When a change in color tone or shape was recognized from the image observation, it was determined as "NG".

<Comprehensive Evaluation>

A measurement sample which was determined to be "NG" in any one or more items of the weight change percentage and the appearance was determined to be "NG" as comprehensive evaluation, and the number of NG samples among three measurement samples was counted.

(Production Example 1: Atmosphere Conditioner Package (X1))

100 g of sodium erythorbate ("sodium erythorbate" available from FUSO Pharmaceutical Industries, Ltd.), 13.3 g of ferrous sulfate, 20 g of sodium carbonate, 15.0 g of activated carbon ("Taiko S" available from Futamura Chemical Co., Ltd.), 1.7 g of sodium bentonite ("NEO-KUNIBOND" available from KUNIMINE INDUSTRIES CO., LTD.), and 20.0 g of water were mixed to obtain a mixture.

The obtained mixture was pressure-molded using a compression molding machine ("Compactor MRCP-80" available from Kurimoto, Ltd.) to obtain a plate-shaped molded body having a thickness of 0.8 mm. Thereafter, the molded body was caused to pass through a flow straightener to obtain a granular ascorbic acid-based atmosphere conditioner having a particle size of about 1.5 mmcp.

Next, a packaging paper having an air-permeable three-layer structure was folded, the packaging paper obtained by laminating a porous polyethylene film on the surface (outer layer) and a porous low-density polyethylene on the inner surface (inner layer), and three sides were melt-sealed using an ultrasonic sealing machine ("FA-300" available from FUJI IMPULSE Co., Ltd.) to prepare a bag (lateral width 60 mm, depth 65 mm).

5.2 g of the ascorbic acid-based atmosphere conditioner was enclosed in the bag, and an opening portion (one side) was melt-sealed by the ultrasonic sealing machine to obtain an atmosphere conditioner package (X1).

(Comparative Production Example: Atmosphere Conditioner Package for Comparison)

To 100 g of iron powder (available from Höganäs Japan K.K., average particle size: 90 μm), 2 g of 50 mass% calcium chloride (metal halide) aqueous solution was added, and the mixture was sufficiently mixed, followed by drying in a dryer to obtain calcium chloride-coated iron powder.

Subsequently, 85 g of 4 mass% saline solution was added to and mixed with 100 g of granular calcined diatomaceous earth ("RC417" available from Showa Chemical Industry Co., Ltd.). All the saline solution was supported by the diatomaceous earth, and the diatomaceous earth remained fluid. To the saline-impregnated diatomaceous earth, 1 g of powdered activated carbon of 100 mesh or less ("Shirasagi A3" available from Osaka Gas Chemicals Co., Ltd.) was mixed to obtain a water donor.

Next, a packaging paper having an air-permeable three-layer structure was folded, the packaging paper obtained by laminating a porous polyethylene film on the surface (outer layer) and a porous low-density polyethylene on the inner surface (inner layer), and three sides were melt-sealed using an ultrasonic sealing machine ("FA-300" available from FUJI IMPULSE Co., Ltd.) to prepare a bag (lateral width 45 mm, depth 55 mm).

2.7 g of the obtained calcium chloride-coated iron powder and 1.45 g of the water donor were enclosed in the bag, and the opening portion (one side) was melt-sealed by the ultrasonic sealing machine to obtain an atmosphere conditioner package for comparison.

(Example 1)

A broccoli on the day following harvest was prepared as a fruit and vegetable, and a portion having a good color tone was cut into 70 g or more and 80 g or less.

The broccoli and two atmosphere conditioner packages (X1) prepared in Production Example 1 were accommodated in an antifog OPP bag (biaxially stretched polypropylene, available from SHIMOJIMA Co., Ltd., 0.02 mm thick, 300 mm wide, 450 mm long) as a packaging material, and an opening portion of the antifog OPP bag was loosely bundled and folded, and then a rubber band was wound therearound two times for fastening (simple sealing, state with slight air permeability, gas permeation amount between "Tightly bundled, folded, and fastened with a rubber band wrapped two times" and "Fastened with a rubber band wrapped two times" in Table 1) to obtain a fruit and vegetable package.

Three of the above fruit and vegetable packages were prepared, and measurement samples were prepared and evaluated by the following procedure.

A hole having a 10 mm diameter was formed in the fruit and vegetable package, a polyurethane tube having a 6 mm diameter connected to a vacuum pump ("DAP-10" available from ULVAC, Inc.) was inserted through the opening portion, and the periphery of the opening portion was brought into close contact with the tube with a rubber tape. Thereafter, degassing was performed with the vacuum pump until the packaging material adhered closely to the broccoli, and a sealing valve connected to the polyurethane tube was closed.

Next, the polyurethane tube was connected to a metering pump ("MP-Σ300N" available from SHIBATA SCIENTIFIC TECHNOLOGY LTD., metering errors ±3%), and 1000 mL of air was enclosed from the tube.

Thereafter, the polyurethane tube was removed, and the opening portion used for degassing and enclosing was sealed by ultrasonic sealing to obtain a measurement sample.

The obtained measurement sample was placed in a cardboard box (220 mm deep, 310 mm long, 230 mm wide) serving as a packing material, and the cardboard box was closed. The fruit and vegetable package was stored under a dark condition to eliminate influences of consumption of carbon dioxide and generation of oxygen due to photosynthesis.

The measurement sample in the packing material was stored at 25 ± 2°C and a humidity of 50%RH or more and 65%RH or less. Periodically (at the start (within 3 minutes after packing), Day 1, Day 2, Day 5, Day 7), the oxygen and carbon dioxide concentrations, the humidity, and the weight change percentage were measured and the appearance was also evaluated. Note that with respect to the oxygen and carbon dioxide concentrations, the humidity, and the weight change percentage, average values of the three measurement samples were used as the measured values of the respective fruit and vegetable packages.

(Comparative Example 1)

In Comparative Example 1, a fruit and vegetable package was prepared in the same manner as in Example 1 except that the atmosphere conditioner package for comparison prepared in Comparative Production Example was used instead of the atmosphere conditioner package (X1), and measurement and evaluation were performed.

(Comparative Example 2)

In Comparative Example 2, the antifog OPP bag as the packaging material and the atmosphere conditioner package (X1) were not used, and only a broccoli as the fruit and vegetable was placed in a corrugated cardboard as the packing material. Thereafter, the packing material accommodating the broccoli was stored in the same manner as in Example 1. Note that measurement and evaluation were performed in the same manner as in Example 1 except that the gas atmosphere in the packing material was measured for the oxygen and carbon dioxide concentrations and the humidity.

(Comparative Example 3)

In Comparative Example 3, a fruit and vegetable package was prepared in the same manner as in Example 1 except that the atmosphere conditioner package (X1) was not used, and measurement and evaluation were performed.

(Comparative Example 4)

In Comparative Example 4, a fruit and vegetable package was prepared in the same manner as in Example 1, except that the atmosphere conditioner package (X1) was not used, and NK barrier packaging (available from Fukusuke Kogyo Co., Ltd., 0.11 mm thick, 300 mm wide, 450 mm long) was used as the packaging material instead of the antifog OPP bag, and heat-sealed (sealing: no air permeability), and measurement and evaluation were performed.

[Table 2]

Table 2

| | Atmosphere conditioner package | Packaging material (B) | Fruit and vegetable package | | Evaluation item | Number of storage days | | | | |
|---|---|---|---|---|---|---|---|---|---|---|
| | | | Sealing method | Air permeability | | At the time of start | Day 1 | Day 2 | Day 5 | Day 7 |
| Example 1 | Atmosphere conditioner package (X1) | Antifog OPP bag | Simple sealing | Slightly permeable | Oxygen concentration (%) | 20.9 | 4.25 | 5.48 | 6.22 | 5.41 |
| | | | | | Carbon dioxide concentration (%) | 0.1 | 14.5 | 12.67 | 11.2 | 11.2 |
| | | | | | Humidity (%RH) | 58 | 85 | 88 | 90 | 89 |
| | | | | | Weight change percentage (%) | 0 | 0 | 0 | 0 | 0 |
| | | | | | Appearance | Good | Good | Good | Good | Good |
| | | | | | Comprehensive evaluation (the number of NGs/3) | 0/3 | 0/3 | 0/3 | 0/3 | 0/3 |
| Comparative Example 1 | Atmosphere conditioner package for comparison | Antifog OPP bag | Simple sealing | Slightly permeable | Oxygen concentration (%) | 20.9 | 4.25 | 6.01 | 5.29 | 4.73 |
| | | | | | Carbon dioxide concentration (%) | 0.1 | 3.97 | 5.2 | 7.37 | 8.67 |
| | | | | | Humidity (%RH) | 58 | 91 | 90 | 90 | 90 |
| | | | | | Weight change percentage (%) | 0 | 0 | 0 | 0 | 0 |
| | | | | | Appearance | Good | Good | Good | Good | Yellowing |
| | | | | | Comprehensive evaluation (the number of NGs/3) | 0/3 | 0/3 | 0/3 | 0/3 | 3/3 |

| | Atmosphere conditioner package | Packaging material (B) | Fruit and vegetable package | | Evaluation item | Number of storage days | | | | |
|---|---|---|---|---|---|---|---|---|---|---|
| | | | Sealing method | Air permeability | | At the time of start | Day 1 | Day 2 | Day 5 | Day 7 |
| Comparative Example 2 | None | No packaging (direct storage in packing material) | | | Oxygen concentration (%) | 20.9 | 20.9 | 20.9 | - | - |
| | | | | | Carbon dioxide concentration (%) | 0.1 | 0.1 | 0.1 | - | - |
| | | | | | Humidity (%RH) | 58 | 62 | 60 | - | - |
| | | | | | Weight change percentage (%) | 0 | 9 | 17 | - | - |
| | | | | | Appearance | Good | Wilt | Wilt/ yellowing | - | - |
| | | | | | Comprehensive evaluation (the number of NGs/3) | 0/3 | 1/3 | 3/3 | - | - |
| Comparative Example 3 | None | Antifog OPP bag | Simple sealing | Slightly permeable | Oxygen concentration (%) | 20.9 | 6.7 | 6.1 | 4.6 | - |
| | | | | | Carbon dioxide concentration (%) | 0.1 | 17 | 18 | 18.7 | - |
| | | | | | Humidity (%RH) | 58 | 84 | 85 | 88 | - |
| | | | | | Weight change percentage (%) | 0 | 0 | 0 | 0 | - |
| | | | | | Appearance | Good | Good | Yellowing | Yellowing/ putrid odor | - |
| | | | | | Comprehensive evaluation (the number of NGs/3) | 0/3 | 0/3 | 3/3 | 3/3 | - |

| | Atmosphere conditioner package | Packaging material (B) | Fruit and vegetable package | | Evaluation item | Number of storage days | | | | |
|---|---|---|---|---|---|---|---|---|---|---|
| | | | Sealing method | Air permeability | | At the time of start | Day 1 | Day 2 | Day 5 | Day 7 |
| Comparative Example 4 | None | NK barrier packaging | Heat seal | None | Oxygen concentration (%) | 20.9 | 0 | 0 | - | - |
| | | | | | Carbon dioxide concentration (%) | 0.1 | 33.4 | 45.2 | - | - |
| | | | | | Humidity (%RH) | 58 | 100 | 100 | - | - |
| | | | | | Weight change percentage (%) | 0 | 0 | 0 | - | - |
| | | | | | Appearance | Good | Dew condensation/ bag swelling | Yellowing/ putrefaction | - | - |
| | | | | | Comprehensive evaluation (the number of NGs/3) | 0/3 | 3/3 | 3/3 | - | - |

EP 4 388 882 A1

As presented in Table 2, it was confirmed that, in the fruit and vegetable packages of Example 1 in which the atmosphere conditioner package (X1) was used as the atmosphere conditioner package (X) having an oxygen absorption capacity, a carbon dioxide generation capacity, and a moisture generation capacity, the atmosphere in the fruit and vegetable package was rapidly adjusted after accommodating the fruit and vegetable, and a low-oxygen, high-carbon dioxide, and high-humidity atmosphere was already achieved on Day 1 as compared with the starting time. Furthermore, it was confirmed that the preservation atmosphere was optimally maintained even on Day 2 of storage at room temperature and freshness was also maintained well even on Day 7.

Meanwhile, the atmosphere conditioner package for comparison used in the fruit and vegetable package of Comparative Example 1 had the oxygen-absorption capacity and the moisture generation capacity, and thus in the fruit and vegetable package of Comparative Example 1, the atmosphere in the fruit and vegetable package was rapidly adjusted after accommodating the fruit and vegetable, and a low-oxygen and high-humidity atmosphere was already achieved on Day 1 as compared with the starting time. However, the atmosphere conditioner package for comparison had no carbon dioxide generation capacity but rather had a carbon dioxide absorption capacity, and thus respiration of the fruit and vegetable was suppressed by the low-oxygen atmosphere, and carbon dioxide in the atmosphere was absorbed by the atmosphere conditioner package for comparison, whereby the carbon dioxide concentration hardly increased even when the number of days of storage increased. Accordingly, the atmosphere in the fruit and vegetable package of Comparative Example 1 was not suitable for long-term storage of broccoli, which is a fruit and vegetable in which generation of ethylene gas is suppressed with coexistence of carbon dioxide at a certain concentration or more, and yellowing occurred on Day 7.

In addition, in Comparative Example 2 in which the broccoli was not accommodated in the packaging material (B) but simply accommodated in the corrugated cardboard serving as the packing material (distribution container) as it was, the atmosphere was not adjusted suitably for the fruit and vegetable, and thus the oxygen concentration remained high, the carbon dioxide concentration remained low, and the humidity was low, the fruit and vegetable was dried, the fruit and vegetable withered already on Day 1, and the weight change percentage exceeded 5 mass% on Day 2.

In Comparative Example 3 in which only the fruit and vegetable was accommodated in the packaging material (B) and simply sealed and Comparative Example 4 in which only the fruit and vegetable was accommodated in the gas-barrier packaging material (B) and sealed, the humidity was maintained, and, due to respiration of the fruit and vegetable, the oxygen concentration decreased and the carbon dioxide concentration increased, but it is considered that sugars in the fruit and vegetable were consumed and decreased. Accordingly, yellowing already occurred on Day 2 due to quality loss of the fruit and vegetable. In particular, in Comparative Example 4 in which there was no ventilation between the inside and the outside of the fruit and vegetable package, all oxygen in the system was consumed by respiration of the fruit and vegetable, resulting in an anoxic state and death of the fruit and vegetable.

Industrial Applicability

According to the fruit and vegetable package of the present invention, the inside of the fruit and vegetable package can be easily and quickly adjusted to a preservation atmosphere that is suitable for fruits and vegetables, and freshness of fruits and vegetables can be maintained for a long period of time.

**Claims**

1. A fruit and vegetable package comprising: at least one fruit and/or vegetable (A), at least one atmosphere conditioner package (X), and a packaging material (B) configured to accommodate the fruit and/or vegetable (A) and the atmosphere conditioner package (X),
   wherein the atmosphere conditioner package (X) has an oxygen absorption capacity, a carbon dioxide generation capacity, and a moisture generation capacity.

2. The fruit and vegetable package according to claim 1, wherein the atmosphere conditioner package (X) includes an atmosphere conditioner package ($X_{abc}$) having an oxygen absorption capacity, a carbon dioxide generation capacity, and a moisture generation capacity.

3. The fruit and vegetable package according to claim 2, wherein the atmosphere conditioner package ($X_{abc}$) comprises at least one selected from the group consisting of: an ascorbic acid-based atmosphere conditioner; and a polyhydric phenol-based atmosphere conditioner.

4. The fruit and vegetable package according to any one of claims 1 to 3, wherein the fruit and/or vegetable (A) is a broccoli.

5. The fruit and vegetable package according to any one of claims 1 to 4, wherein the packaging material (B) is sealed in such a manner that a part of the packaging material (B) is in an air-permeable state.

6. A method for maintaining freshness of fruits and vegetables, the method comprising:

   a step (I) of obtaining a fruit and vegetable package by accommodating at least one fruit and/or vegetable (A) and at least one atmosphere conditioner package (X) in a packaging material (B); and
   a step (II) of maintaining the fruit and vegetable package, wherein
   in the step (II), the atmosphere conditioner package (X) adjusts an atmosphere in the fruit and vegetable package by absorbing oxygen and generating carbon dioxide and moisture.

7. The method for maintaining freshness of fruits and vegetables according to claim 6, wherein the step (I) comprises: a step (I-1) of inserting the fruit and/or vegetable (A) and the atmosphere conditioner package (X) into the packaging material (B) through an opening portion of the packaging material (B); and then a step (I-2a) of sealing the opening portion in an air-permeable state.

8. The method for maintaining freshness of fruits and vegetables according to claim 6 or 7,

   wherein the step (II) is a step of maintaining the fruit and vegetable package for one day or longer, and
   an atmosphere in the fruit and vegetable package after accommodating for one day or longer and two days or shorter satisfies the following Requirements (i) to (iii):

   · Requirement (i): an oxygen concentration of 1% or more and 10% or less;
   · Requirement (ii): a carbon dioxide concentration of more than 10%; and
   · Requirement (iii): a humidity of 80% or more.

9. The method for maintaining freshness of fruits and vegetables according to any one of claims 6 to 8, wherein a maintaining temperature of the fruit and vegetable package in the step (II) is 0°C or higher and 40°C or lower.

## INTERNATIONAL SEARCH REPORT

| International application No. |
|---|
| **PCT/JP2022/031341** |

**A. CLASSIFICATION OF SUBJECT MATTER**

*A23B 9/14*(2006.01)i; *A23B 9/20*(2006.01)i; *A23B 9/26*(2006.01)i; *B01D 53/14*(2006.01)i; *B65D 81/26*(2006.01)i; *B65D 85/50*(2006.01)i

FI: A23B9/14; B01D53/14 100; A23B9/20; A23B9/26; B65D85/50 120; B65D81/26 S

According to International Patent Classification (IPC) or to both national classification and IPC

**B. FIELDS SEARCHED**

Minimum documentation searched (classification system followed by classification symbols)

A23B9/14; A23B9/20; A23B9/26; B01D53/14; B65D81/26; B65D85/50

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | CN 108142546 A (SHANGHAI LVSHENG INDUSTRY CO., LTD.) 12 June 2018 (2018-06-12)<br>paragraph [0001], claim 1 | 1-4, 6, 8-9 |
| Y | JP 2017-030813 A (MITSUBISHI GAS CHEMICAL CO) 09 February 2017 (2017-02-09)<br>paragraphs [0001]-[0002], [0013], examples 1-3, table 1 | 1-9 |
| Y | JP 2019-006500 A (ASAHI KASEI CORP) 17 January 2019 (2019-01-17)<br>paragraphs [0008], [0010], [0050], [0052]-[0053] | 1-9 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **25 October 2022** | **08 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/031341**

| Patent document cited in search report | | | Publication date (day/month/year) | Patent family member(s) | | | Publication date (day/month/year) |
|---|---|---|---|---|---|---|---|
| CN | 108142546 | A | 12 June 2018 | (Family: none) | | | |
| JP | 2017-030813 | A | 09 February 2017 | (Family: none) | | | |
| JP | 2019-006500 | A | 17 January 2019 | CN | 109094858 | A | |
| | | | | KR | 10-2018-0138541 | A | |
| | | | | KR | 10-2020-0034687 | A | |

Form PCT/ISA/210 (patent family annex) (January 2015)

**EP 4 388 882 A1**

**REFERENCES CITED IN THE DESCRIPTION**

**Patent documents cited in the description**

- JP H05168400 A